# FASCICULE DE BREVET EUROPEEN

(11) **EP 2 020 368 B1**
(45) Date de publication et mention de la délivrance du brevet: **21.04.2010**
(21) Numéro de dépôt: 08300208.9
(22) Date de dépôt: 19.05.2008
(51) Int. Cl.: B62D 67/00, B62D 25/20, B62D 65/14, B09B 5/00, B60R 13/02, B60R 13/04, F16B 19/00

(54) **Pièce à recycler comportant un élément polluant et procédé correspondant**
Zu recycelndes Teil, das ein Schadstoffelement umfasst, und entsprechendes Verfahren
Recyclable part containing a polluting element and corresponding method

(30) Priorité: 01.08.2007 FR 0756864
(43) Date de publication de la demande: 04.02.2009
(73) Titulaire: Renault S.A.S., 92100 Boulogne-Billancourt (FR)
(72) Inventeur: Abraham, Fabrice, 78200 Mantes-la-Jolie (FR)

(56) Documents cités:
- EP-A- 1 197 393
- JP-A- 11 030 214

## Description

La présente invention a pour objet une pièce principale à recycler comprenant un élément polluant plaqué ou en surface sur la pièce principale, les deux éléments étant réalisés dans des matériaux non compatibles pour le recyclage. L'invention concerne plus particulièrement, l'extraction de cet élément polluant.

On connaît du document EP-A-1197393 un véhicule automobile comportant une pièce selon le préambule de la revendication 1 en forme d'une portière sur laquelle est rapportée, pour sa protection en cas de choc latéral, une moulure de porte.

Pour sa fixation sur la portière, la moulure de porte est équipée d'agrafes dont les têtes s'encliquettent dans des ouvertures prévues en correspondance dans la tôle de la portière.

L'inconvénient d'un tel dispositif est que rien ne permet de séparer, lors du recyclage du véhicule, la moulure de porte et la portière. Un tel élément doit pourtant nécessairement être séparé de la pièce principale qui le porte.

En effet, ces éléments doivent être extraits pour le traitement du recyclage des Véhicules Hors d'Usage (VHU). Dans quelques années, les constructeurs automobiles devront endurer les coûts du recyclage des VHU pour un recyclage à 85% et une valorisation à 95% en masse des VHU.

Pour arriver à respecter ces quotas au moindre coût, un certain nombre de pièces non métalliques (particulièrement en polymères) devront être démontées, mises en conformité avec les cahiers des charges des filières de recyclage matières chargées de les traiter. Pour cela, les différents éléments polluants des matériaux principaux à recycler devront être démontés par les opérateurs chargés de la mise en conformité de manière la plus rapide possible et avec des outils standards.

Ainsi, l'invention propose une pièce principale à recycler appartenant au domaine automobile, ou à tout autre domaine nécessitant un recyclage de matériau tel que par exemple l'aviation, les produits électriques et électroniques, etc.

A cet effet, un premier objet de l'invention est de fournir une pièce principale à recycler comprenant un élément polluant plaqué ou en surface sur la pièce principale, les deux éléments étant réalisés dans des matériaux non compatibles pour le recyclage caractérisée en ce que ladite pièce principale définit au moins un évidement de manière à permettre l'extraction au moins en partie dudit élément polluant par l'insertion d'un outil dans ledit évidement. Tel que souligné précédemment, la réalisation de pièces facilitant l'extraction d'élément polluant est particulièrement avantageux. Selon l'invention, les évidements permettent de faciliter la tâche des opérateurs en la rendant plus rapide et moins pénible puisqu'en un seul mouvement précis, ils séparent les deux éléments dans deux filières de recyclage différentes. Par ailleurs, la réalisation des évidements par exemple sur des bas volets de véhicule a des coûts particulièrement faibles par rapport au coût engendré par un recyclage de matière plastique comprenant des éléments polluants à retirer après le broyage.

Selon un premier mode de réalisation, l'évidemment agencé dans ladite pièce principale peut être réalisé sous l'élément polluant de manière à l'extraire en appliquant une force sensiblement parallèle à l'outil. L'évidemment peut être un trou agencé dans la pièce principale. Il convient de noter que pour rendre accessible ces évidements afin d'extraire l'élément polluant, la pièce principale ou plus précisément, le bas volet doit être démonté de la caisse du véhicule.

Selon un second mode de réalisation, l'évidemment agencé dans ladite pièce principale peut être accessible latéralement au moins en partie sous l'élément polluant, lorsque celui-ci se trouve sur la pièce principale, de manière à l'extraire par pivotement de l'outil en appui dans l'évidemment. Il convient de noter, dans ce cas, que ces évidements peuvent être accessibles sans démontage du bas volet, ce qui peut être particulièrement aisé pour le recyclage puisque l'opérateur peut le retirer facilement. Les évidements peuvent même trouver une application au cours de la vie d'un véhicule lorsqu'un utilisateur souhaite changer l'élément métallique se trouvant sur le bas volet, qui est en fait un élément de décoration et de protection du bas volet, soit parce qu'il l'a jugé usé ou parce qu'il souhaite personnaliser son véhicule, par exemple. Selon ce second mode, l'évidemment peut être une encoche s'étendant transversalement par rapport à la dimension longitudinale de l'élément polluant et débouchant de part et/ou d'autre sous l'élément polluant.

Selon une caractéristique de l'invention, la pièce principale peut être un habillage de bas volets de véhicule automobile réalisé dans un matériau organique de synthèse tel que le polypropylène, et l'élément polluant peut être une plaque métallique.

L'invention concerne également un procédé de recyclage d'une telle pièce principale caractérisé en ce qu'il comprend les étapes suivantes :
- insertion d'un outil dimensionné pour entrer dans ledit évidement,
- application d'une force sur l'outil en le pivotant vers l'élément polluant, l'outil étant utilisé en tant que levier, lorsqu'il est en appui dans l'évidemment débouchant de part et/ou d'autre sous l'élément polluant et par exemple en butée dans le fond de l'évidemment ou par application d'une force sensiblement parallèle à l'outil lorsque l'évidemment est un trou, et
- séparation de la pièce principale et de l'élément polluant afin de les placer dans des filières de recyclage différentes.

L'invention concerne, enfin, l'utilisation de cette pièce principale à recycler dans le domaine automobile.

On va maintenant décrire un exemple de mise en oeuvre de l'invention dans ses divers aspects et variantes, en référence aux figures annexées :
- la figure 1 représente une vue en trois dimension d'un coté de caisse de véhicule comprenant une pièce principale à recycler représentée par un bas volet de véhicule selon l'invention et une plaque métallique à extraire pour le recyclage selon le premier mode de réalisation,
- la figure 2 représente une vue schématique de la pièce principale comportant un élément polluant plaqué dessus et à extraire selon le second mode de réalisation.

Dans la description qui va suivre, on adoptera à titre non limitatif une orientation longitudinale, verticale et transversale selon l'orientation traditionnellement utilisée dans l'automobile et indiquée par le trièdre X, Y, Z.

En références aux figures, il est représenté un véhicule automobile avec une porte latérale manquante comportant un habillage de bas volet 10 qui est aussi dénommé pièce principale dans la présente demande. L'habillage tel que défini traditionnellement dans le domaine automobile est souvent constitué de ladite pièce principale 10 en polymère, de préférence en polypropylène, sur laquelle est plaqué ou clipsé ou collé avec de l'adhésif double, une plaque métallique 12 sur lequel on peut retrouver le nom du véhicule concerné. Or la filière de recyclage du polypropylène ne supporte pas la présence de ces inserts métalliques 12 qui polluent la pièce principale et empêche un recyclage adéquat. Il faut donc extraire ces éléments. La pièce principale 10 et l'élément polluant 12 sont des pièces s'étendant sensiblement longitudinalement. L'invention propose donc de réaliser un (ou des) évidemment(s) 14 agencé sous ledit élément polluant de manière à permettre l'extraction au moins en partie dudit élément par application d'une force sensiblement parallèle à un outil 16 ou par pivotement de l'outil 16 en appui dans ledit évidement.

Pour cela l'invention propose deux modes de réalisation.

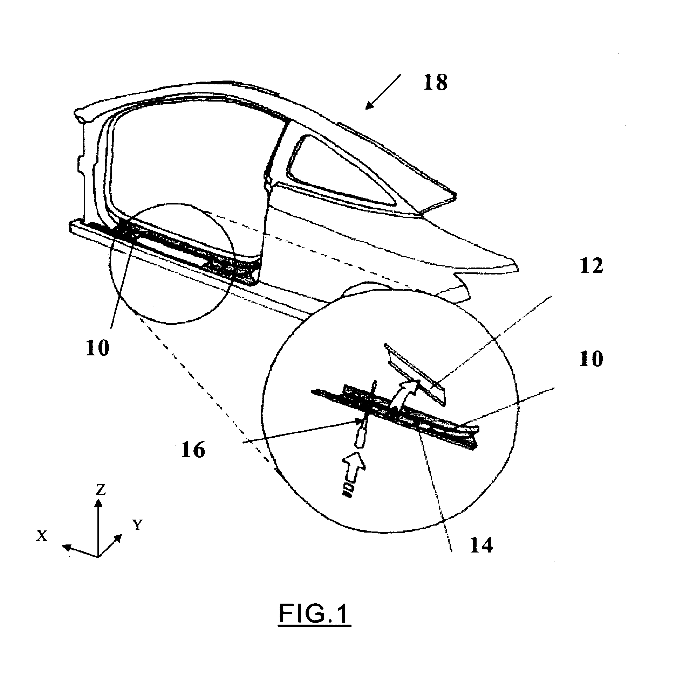

Selon le premier mode de réalisation illustré sur la figure 1, l'évidemment 14 agencé dans ladite pièce principale est réalisé sous l'élément polluant de manière à l'extraire en appliquant une force sensiblement parallèle à l'outil. L'évidemment est un trou, de toute forme, agencé dans la pièce principale dimensionné de manière à ce qu'un outil utilisé classiquement pour le recyclage, tel qu'un tournevis, puisse s'insérer facilement dans le trou. Ainsi, pour extraire la plaque métallique 12 d'un bas volet de véhicule, l'opérateur devra démonter le bas volet du véhicule, positionner l'outil, dans les trous 14, sensiblement perpendiculairement au plan défini par la plaque métallique sous le bas volet, exercer une force verticale vers le haut tel que représenté sur la figure 1 puis retirer la plaque métallique 12.

Ainsi, le procédé de recyclage d'un habillage de bas volet selon ce mode de réalisation par un opérateur comporte les étapes suivantes :
- insertion latérale d'un outil 16 dimensionné pour entrer dans ledit trou de la pièce principale 10, et
- application d'une force sur l'outil 16 sensiblement parallèle à l'outil.

Après cela, l'opérateur sépare les deux éléments, et isole la pièce principale 10 de l'élément métallique 12. Il peut ainsi mettre la pièce principale dans sa filière de recyclage adaptée. De la même manière l'élément métallique rejoindra sa propre filière de recyclage.

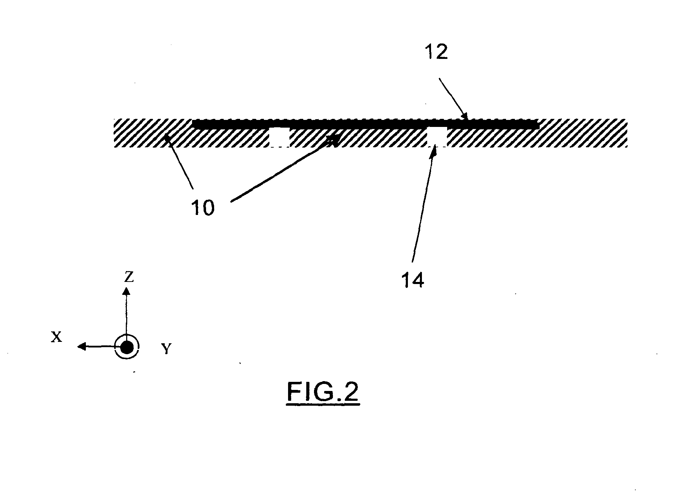

Selon le second mode de réalisation illustré sur la figure 2, l'évidemment 14 est dimensionné pour recevoir un outil apte à servir de levier pour l'extraire au moins partiellement lorsqu'il est en appui dans l'évidemment et plus précisément en butée dans le fond. Pour cela, l'évidemment agencé dans ladite pièce principale est accessible latéralement par rapport à l'élément polluant, il se présente sous la forme d'une encoche s'étendant transversalement par rapport à la dimension longitudinale de l'élément polluant et débouche de part et/ou d'autre sous l'élément polluant. Il présente indifféremment une section rectangulaire, triangulaire ou partiellement circulaire.

Ainsi, le procédé de recyclage d'un habillage de bas volet selon ce mode de réalisation par un opérateur comporte les étapes suivantes :
- insertion latérale d'un outil 16 dimensionné pour entrer dans ladite encoche entre la pièce principale 10 et l'élément polluant 12 avec ou sans nécessité de démonter le bas volet, et
- application d'une force sur l'outil 16 en le pivotant vers l'élément polluant, l'outil étant utilisé en tant que levier, lorsqu'il est en appui dans l'évidemment débouchant de part et/ou d'autre sous l'élément polluant et par exemple en butée dans le fond de l'évidemment.

Après cela, l'opérateur sépare les deux éléments, et isole la pièce principale 10 de l'élément métallique 12. Il peut ainsi mettre la pièce principale dans sa filière de recyclage adaptée. De la même manière l'élément métallique rejoindra sa propre filière de recyclage. Tout ceci s'opérant de manière rapide et aisée pour l'opérateur.

Selon les modes de réalisation, la pièce principale 10 comporte plusieurs évidements tel que représentés sur les figures 1 et 2, chaque évidemment permettant d'extraire une partie de l'élément polluant localement pour pouvoir, une fois que tous les évidements ont été sollicités le retirer entièrement avant le recyclage de la pièce principale. Ceci permet de faciliter la tache d'un opérateur en divisant l'effort physique à effectuer sur toute la longueur de l'élément polluant. A cet effet, les outils 16 utilisés sont les outils standards de recycleurs tel que, par exemple, un tournevis.

Il convient de noter que cette méthode de recyclage peut être utilisée pour tout type de pièce polluante à extraire avant le passage dans la filière de recyclage d'une pièce principale.

## Revendications

1. Pièce principale à recycler (10) comprenant un élément (12) polluant plaqué ou en surface sur la pièce principale, les deux éléments étant réalisée dans des matériaux qui, ensemble, ne sont pas compatibles pour le recyclage **caractérisée en ce que** ladite pièce principale définit au moins un évidement (14) de manière à permettre l'extraction au moins en partie dudit élément polluant par l'insertion d'un outil (16) dans ledit évidement.

2. Pièce principale selon la revendication 1, **caractérisée en ce que** l'évidemment (14) agencé dans ladite pièce principale est réalisé sous l'élément polluant (12) de manière à l'extraire en appliquant une force sensiblement parallèle à l'outil (16) orientée vers l'élément polluant.

3. Pièce principale selon la revendication 2, **caractérisée en ce que** l'évidemment (14) est un trou agencé dans la pièce principale.

4. Pièce principale à recycler selon la revendication 1, **caractérisé en ce que** l'évidemment (14) agencé dans ladite pièce principale est accessible latéralement au moins en partie sous l'élément polluant (12) de manière à l'extraire par pivotement de l'outil vers l'élément polluant en appui dans l'évidemment.

5. Pièce principale selon la revendication 4, **caractérisé en ce que** l'évidemment est une encoche s'étendant transversalement par rapport à la dimension longitudinale de l'élément polluant et débouchant de part et/ou d'autre sous l'élément polluant.

6. Pièce principale à recycler selon l'une des revendications précédentes, **caractérisé en ce qu'**il s'agit d'un habillage de bas volets (10) de véhicule automobile réalisé dans un matériau organique de synthèse tel que le polypropylène.

7. Procédé de recyclage d'une pièce principale selon l'une des revendications précédentes **caractérisé en ce qu'**il comprend les étapes suivantes :
- insertion d'un outil (16) dimensionné pour entrer dans ledit évidement,
- application d'une force sur l'outil (16) en le pivotant vers l'élément polluant, l'outil étant utilisé en tant que levier, lorsqu'il est en appui dans l'évidemment débouchant de part et/ou d'autre sous l'élément polluant et par exemple en butée dans le fond de l'évidemment ou par application d'une force sensiblement parallèle à l'outil (16) lorsque l'évidemment est un trou, et
- séparation de la pièce principale et de l'élément polluant afin de les placer dans des filières de recyclage différentes.

8. Utilisation de la pièce principale à recycler selon l'une des revendications 1 à 6 dans le domaine automobile.

## Claims

1. Main part (10) to be recycled, including a polluting element (12) pressed onto the main part or located on the surface thereof, the two elements being made of materials which, together, are not suitable for recycling, **characterized in that** said main part defines at least one recess (14) such that at least part of said polluting element can be removed by inserting a tool (16) into said recess.

2. Main part according to Claim 1, **characterized in that** the recess (14) in said main part is made under the polluting element (12) in order to remove it by applying a force approximately parallel to the tool (16) and in the direction of the polluting element.

3. Main part according to Claim 2, **characterized in that** the recess (14) is a hole in the main part.

4. Main part to be recycled according to Claim 1, **characterized in that** at least part of the recess (14) in said main part can be accessed laterally under the polluting element (12) in order to remove it by pivoting the tool towards the polluting element supported in the recess.

5. Main part according to Claim 4, **characterized in that** the recess is a notch extending transversely with respect to the longitudinal dimension of the polluting element and emerging on one side and/or the other under the polluting element.

6. Main part to be recycled according to one of the preceding claims, **characterized in that** it is a motor vehicle skirt trim (10) made of a synthetic organic material such as polypropylene.

7. Method of recycling a main part according to one of the preceding claims, **characterized in that** it comprises the following steps:
- insertion of a tool (16) designed to enter said recess,
- application of a force on the tool (16) by pivoting it towards the polluting element, with the tool being used as a lever, when it is supported in the recess emerging on one side and/or the other under the polluting element and, for example, abutting the bottom of the recess, or by applying a force approximately parallel to the tool (16) when the recess is a hole, and
- separation of the main part and the polluting element in order to place them in different recycling channels.

8. Use of the main part to be recycled according to one of Claims 1 to 6 in the automotive field.

## Patentansprüche

1. Zu recycelndes Hauptteil (10), das ein Schadstoffelement (12) umfasst, das auf der Fläche des Hauptteils plattiert ist oder sich in ihr befindet, wobei die beiden Elemente aus Materialien hergestellt sind, die zusammen für das Recyceln nicht kompatibel sind, **dadurch gekennzeichnet, dass** das Hauptteil mindestens eine Ausnehmung (14) definiert, um das zumindest teilweise Extrahieren des Schadstoffelements durch Einführen eines Werkzeugs (16) in die Ausnehmung zu gestatten.

2. Hauptteil nach Anspruch 1, **dadurch gekennzeichnet, dass** die in dem Hauptteil ausgebildete Ausnehmung (14) unter dem Schadstoffelement (12) realisiert ist, um es durch Anlegen einer im Wesentlichen parallel zum Werkzeug (16) verlaufenden und zum Schadstoffelement ausgerichteten Kraft zu extrahieren.

3. Hauptteil nach Anspruch 2, **dadurch gekennzeichnet, dass** die Ausnehmung (14) ein in dem Hauptteil ausgebildetes Loch ist.

4. Hauptteil nach Anspruch 1, **dadurch gekennzeichnet, dass** die in dem Hauptteil ausgebildete Ausnehmung (14) zumindest teilweise lateral unter dem Schadstoffelement (12) zugänglich ist, um dieses durch Schwenken des Werkzeugs zu dem Schadstoffelement unter Anlage an die Ausnehmung zu extrahieren.

5. Hauptteil nach Anspruch 4, **dadurch gekennzeichnet, dass** die Ausnehmung eine Kerbe ist, die sich quer zur Längsabmessung des Schadstoffelements erstreckt und auf beiden oder auf einer Seite unter dem Schadstoffelement mündet.

6. Hauptteil nach einem der vorhergehenden Ansprüche, **dadurch gekennzeichnet, dass** es sich um eine Verkleidung der unteren Klappen (10) des Kraftfahrzeugs handelt, die aus einem organischen synthetischen Material, wie zum Beispiel Polypropylen, hergestellt ist.

7. Verfahren zum Recyceln eines Hauptteils nach einem der vorhergehenden Ansprüche, **dadurch gekennzeichnet, dass** es die folgenden Schritte umfasst:
- Einführen eines Werkzeugs (16), das zum Eintreten in die Ausnehmung dimensioniert ist,
- Anlegen einer Kraft an das Werkzeug (16), indem es zu dem Schadstoffelement geschwenkt wird, wobei das Werkzeug als Hebel verwendet wird, wenn es in der auf beiden Seiten oder auf einer Seite unter dem Schadstoffelement mündenden Ausnehmung anliegt und zum Beispiel an den Boden der Ausnehmung anstößt, oder durch Anlegen einer im Wesentlichen parallel zu dem Werkzeug (16) verlaufenden Kraft, wenn es sich bei der Ausnehmung um ein Loch handelt, und
- Trennen des Hauptteils und des Schadstoffelements, um sie in verschiedene Recyclinglinien zu platzieren.

8. Verwendung des zu recycelnden Hauptteils nach einem der Ansprüche 1 bis 6 im Kraftfahrzeugbereich.
